# EUROPEAN PATENT SPECIFICATION

(11) **EP 1 478 184 B1**
(45) Date of publication and mention of the grant of the patent: **20.09.2006**
(21) Application number: 04006824.9
(22) Date of filing: 22.03.2004
(51) Int. Cl.: H04N 7/24, H04L 12/28

(54) **A process for the transmission of digital TV signals for single-frequency digital terrestrial networks (DVB-T) and for handling the signals after reception**
Verfahren zur Übertragung von digitalen Fernsehsignalen über terrestrische digitale Monofrequenznetzwerke (DVB-T) und zur Signalbehandlung nach dem Empfang
Procédé de transmission de signaux de télévision numériques sur des reseaux numériques terrestres monofréquence (DVB-T) et pour le traitement de signaux après la réception

(30) Priority: 13.05.2003 IT TO20030346
(43) Date of publication of application: 17.11.2004
(73) Proprietor: RAI RADIOTELEVISIONE ITALIANA (S.p.A.), 00195 Roma (IT)
(72) Inventor: Morello, Alberto, 10126 Torino (IT); Visentin, Michele, 10126 Torino (IT); Sacco, Bruno, 10154 Torino (IT)
(74) Representative: Spandonari, Carlo

(56) References cited:
- EP-A- 1 337 112
- US-A1- 2002 064 189
- "INFORMATION TECHNOLOGY - GENERIC CODING OF MOVING PICTURES AND ASSOCIATED AUDIO INFORMATION: SYSTEMS. TECHNOLOGIES DE L'INFORMATION - CODAGE DES IMAGES ANIMEES ET DU SON ASSOCIE: SYSTEMES" INTERNATIONAL STANDARD ISO/IEC, XX, XX, vol. 13818-1, 15 April 1996 (1996-04-15), pages I-XY,1-119, XP000667435

## Description

This invention is concerned with a process for transmitting digital TV signals for single-frequency digital terrestrial networks (DVB-T), particularly for transmitting digital television programs, and also to a process for handling the signals after reception in terrestrial transmission installations.

In digital television, based on MPEG coding of video and audio data, several television programs are multiplexed into a single transport stream which incorporates, beside the data, also all the information required for the audiovisual content to be synchronized, decoded and displayed, and, moreover, a suitable, variable number of null packets, whose only purpose is to smoothen the stream, without trasnporting any useful information.

As known, by using the above technique, in which a number of television programs are multiplexed into a single transport stream, analog terrestrial transmitters can be fed via satellite links. EP-A-1 337 112 (to which the reader is referred for a clearer understanding of this invention) describes how terrestrial transmitters may be fed with DVB-T programs for retransmission from respective aerials at differente frequencies (multi-frequency network) without having to provide each of the individual transmitters with an expensive remux for realignment of the PSI-SI tables of the transport stream. This leads to a considerable saving in the set-up of the equipment.

By the process disclosed in EP-A-1 337 112, a binary stream broadcast from the satellite can be converted to a binary stream valid for terrestrial transmission at each of the transmitters, for the case of multi-frequency networks, because the use of different carrier frequencies in the several transmitters make it superfluous to synchronize the signal streams with each other. It would be desirable in many cases, for reasons of operating simplicity and efficiency of spectrum utilization, to use the same carrier frequency in all the transmitters, but it is not possible to feed single-frequency transmitters identically with the above method, because its operating mechanism does not preserve alignment among the various streams.

US 2002/0064189 discloses a method to insure the identification of transport packets associated with multiple transport streams during demultiplexing. However, this method, too, fails to preserve synchronisation.

It is the main object of the invention to improve the above methods of transmission so that transmitters which broadcast the same programs may be satellite fed on a single carrier frequency.

The above and other objects and advantages, such as will appear from the following disclosure, are achieved by the invention with a process for the transmission of digital TV signals having the features recited in claim 1.

Other advantageous features of the invention are set out in the dependent claims.

A few preferred embodiments of the invention are described below, with reference to the attached drawings, wherein:

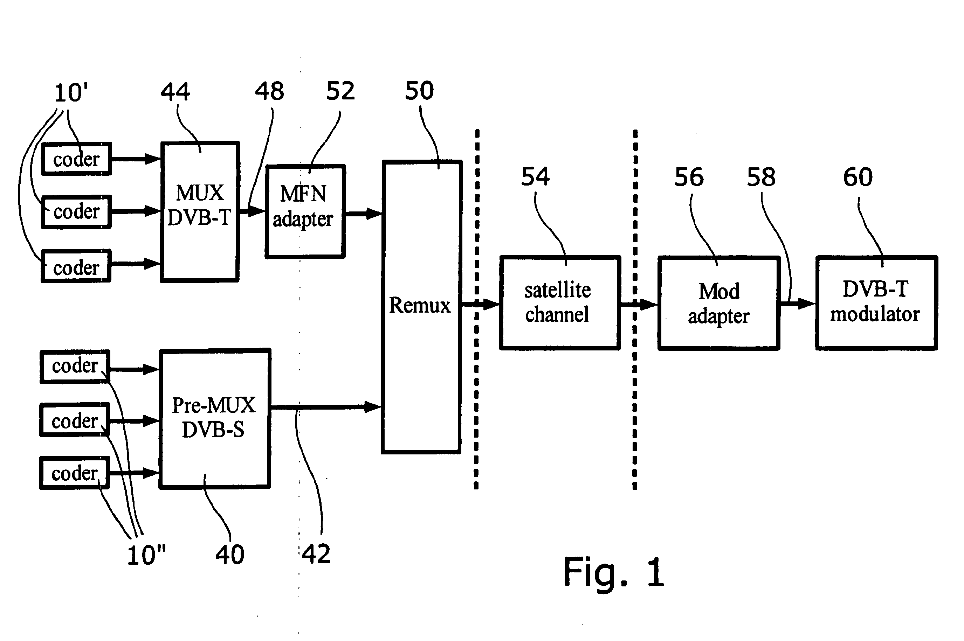

Fig. 1 is a partial block diagram of a satellite link connecting a central generation station to a number of receiving station, among which is a single-frequency terrestrial trasmission station.

In Fig. 1, a first group of coders 10' receives television programs intended for feeding a single-frequency network of terrestrial re-transmission, while a second group of coders 10" receives television programs intended for different users, typically only satellite end users. The coders of both groups process and compress the respective signals by a conventional procedure.

The elementary output stream from coders 10" are applied to a digital DVB-S pre-multiplexer 40, known per se, which generates, on an output 42, a transport stream containing, conventionally, appropriate PSI/SI tables, as well as a suitable number of null packets.

The elementary output stream from coders 10', on the other hand, are applied to a digital DVB-T multiplexer 44, where the stream is provided with appropriate PSI/SI tables, as well as the required null packets, thereby generating a transport stream 48.

At the end, both partial transport streams 42 and 48 shall be multiplexed in a multiplexer 50, where all the auxiliary information is liable to changes, however, since the PSI/SI tables are regenerated, the input null packets are ignored and are themselves regenerated depending on the requirements of the stream.

On the other hand, if the low-capacity stream 48 is to be reconstructed at reception so that it contains a payload equivalent to the original payload, it will be understood (as disclosed in more detail in the above mentioned EP-A-1 337 112) that at least the following service information is to be preserved:
- the PAT table (Program Association Table): it is unique, its PID is 0x0000, and lists an identifier for each program, which is unique in the network to which the stream belongs, and contains the PID of the PMT table;
- the NIT table (Network Information Table): it is unique, its PID is 0x0010; it contains tuning and modulation parameters for the binary stream (frequency, symbol rate, coding rate, etc.), which depend on the type of network (satellite, cable or terrestrial);
- the SDT table (Service Description Table): it is unique and its PID is 0x0011; it contains, for each program in the binary stream, its identifier and other information such as the program name (e.g. RAI1, RAI2, ...) and its producer (e.g. RAI);
- the EIT table (Event Information Table): it is unique, its PID is 0x0012; it contains text information concerning the program schedule (title, starting and duration timetable, description of the current and the following broadcasts).

The process described in EP-A-1 337 112 provides that, in order to save the above items of information, the stream is processed in an apparatus 52, called MFN adapter (Multi Frequency Network Adapter), having the task of changing the original PID of the PAT, SDT, NIT and EIT tables into a respective hiding PID, which is chosen to a value not reserved in the DVB standard. By this device, all the packets that have been newly labeled this way are not recognized as tables by remultiplexer 50, and are therefore reintroduced as generic data, without incurring any change, into the final transport stream that is to be modulated on a carrier and transmitted over the satellite link. EP-A-1 337 112 provides that these steps are performed by a computer programmed with a so-called "filter program", as well known in data processing. Remultiplexer 50, which receives at its input both the DVB-T and the DVB-S streams, will take care of generating PSI/SI tables that are consistent with the overall program stream (PAT, SDT, NIT e EIT), valid for DVB-S transmission, and of correcting the information contained in the valid PCRs of the respective streams, including the terrestrial stream.

In the receiving station, a complementary apparatus 56, called Mod adapter (Modulator Adapter) has the task of creating a transport stream having a payload equivalent to the original terrestrial payload by restoring the information that was masked by MFN adapter 52. In order to do so, Mod adapter 56 shall: identify the services to be eliminated, based on the value of the priority bit in each packet or on a previously drafted list; eliminate (logically, not physically) the packets belonging to services that are to be discarded, the satellite-related PSI/SI tables, the satellite-related PCRs, by marking them as "null packets" (PID=8191: in practice, their respective PIDs are changed to 8191); and restore the original values of the PIDs in the packets carrying the PSI/SI tables for the terrestrial services (PAT, SDT, NIT e EIT), which had been previously hidden by the MFN adapter.

As disclosed in EP-A-1 337 112, the above procedure generates an output stream 58 having a gross bit rate equal to the satellite stream, but a payload equal to the original terrestrial stream 48. However, while the procedure allows the stream to be reconstructed for transmission from terrestrial aerials, it does not attempt to maintain synchronization among the different streams, because the transmission at different frequencies does not require synchronization.

The present invention provides that, upstream of multiplexer 50, not only the above-listed tables are preserved as taught in EP-A-1 337 112, but the value of the PCR field of each data packet is also saved to a protected area of the transport stream, and, moreover, the null packets in the portion of the transport stream intended for terrestrial transmitters, i.e. in stream 48, are masked by replacing their PIDs with a further hiding PID value, which is predetermined in arbitrary fashion.

As known, the PCR is a 48-bit field (having a period not exceeding 40 msec according to the DVB standard), which is inserted into the stream of video and audio packets, or in a stream having a predetermined PID, and which carries the synchronization information required by the receiver for coding the programs. As it appears from the above mentioned EP-A-1 337 112, the preservation of this value is not necessary whenever the programs are re-transmitted from terrestrial stations with different carriers, because in that case the PCR may be redefined independently in each station, without consistency with the other stations. On the other hand, if the programs are re-transmitted from terrestrial stations with the same carrier frequency, as will better appear from the following disclosure, the PCR field, too, should be identical in each station, since otherwise the equality among the signals would be lost. It is also apparent that, for the same reasons, the null packets must be preserved.

On reception, all the steps disclosed in EP-A-1 337 112 must be performed. Subsequently, in order to achieve the accurate reconstruction of the bit-rate as required according to the present invention, all the null packets need also to be removed from the received stream, while the original null packets of the terrestrial stream, as well as the stream tables need to be restored, on the one hand, and, on the other hand, the PCR field saved in transmission will have to be every time retrieved and restored.

As a person skilled in the art will readily understand, the improved procedure according to the invention, by rebuilding the stream with all the original packets and by restoring the synchronization PCR field, guarantees that the streams from all the terrestrial stations are the same.

It should be considered that the DVB standard provides for two different modes of transporting the PCR field. According to the "PCR independent" mode, this field is inserted in the stream of video and audio packets of each program; according to the "PCR common" mode, the PCR is common for all programs transported in the stream, and it is then inserted in packets with a dedicated PID. Depending on the above two different transport modes in respect of the PCR field, the invention provides several ways of saving the PCR field.

According to a first embodiment, which can only be used in the "PCR common" mode, the PCR is saved by copying it to the OPCR field of the same packet. Standard ISO IEC 13818-1, sec. 2.4.3.5, defining the OPCR field, provides that this field is maintained in the multiplexer, i.e. that it is handled as ordinary transmission data. Accordingly, on reception, the OPCR field can be retrieved and copied back to the PCR field, thereby restoring the original conditions.

According to a second method of saving the PCR field, which is valid in either of the above PCR transport modes, (both "common" and "independent"), the PCR field is saved by copying the entire packet containing the PCR field to a null packet, and by assigning to the packet so changed a predetermined, arbitrary PID, chosen among values not reserved for satellite reception. Consequently, packet processing during multiplexing and de-multiplexing will handle packets with the above arbitrary PID as an ordinary date packet. On reception, the packet with said arbitrary PID is recognized, and the PCR field is retrieved and restored to its original position.

According to a third embodiment, only valid with the "common" mode, the packets containing PCRs are emitted at a rate at least double the rate prescribed by the DVB standard, and the PID of one packet in two is modified, by again replacing it by a predetermined arbitrary PID. Moreover, for a proper operation of Remux 50, the field called continuity counter is adjusted in every packet of each of the two streams thus obtained. As known to the person skilled in the art, the 4-bit value should be incremented by one unit at the emission of each fresh packet in that stream.

According to a fourth embodiment of the invention, which also can only be used in the "common" transmission mode, the value of the PCR field is saved in a null packet that is intermediate between two PCR packets, so that a new PCR packet is generated, having an interpolated value and a valid continuity counter. Moreover, the PID of the original PCR packets is modified. On reception, each packet having a PCR field is re-labeled as a null packet, while the PID of the corresponding hidden packet is restored to the original value.

## Claims

1. A process for transmitting digital television signals, wherein a plurality of elementary binary streams, which are generated in a central generating station and are associated with respective television programs, are multiplexed into a single, first transport stream, which also incorporates packets containing PSI/SI tables, PCR packets and null packets, and the first transport stream is then modulated and transmitted to a plurality of terrestrial stations, and wherein, before modulation, the first transport stream is subjected to the steps of masking the packets carrying PSI/SI tables of type PAT, SDT, NIT and EIT, by replacement of their PIDs with predetermined masking PIDs, chosen among values that are not reserved for satellite reception, and remultiplexing the resulting transport stream in order to generate a second transport stream for transmission, the second transport stream having higher capacity than the first transport stream,
**characterized in that** the transport stream, before modulation, is also subjected to the following operating steps:
- masking the null packets in the portion of the stream that is intended for terrestrial transmitters, by replacing their PIDs with a further, predetermined masking PID value;
- saving the value of the PCR field in each data packet to an area of the transport stream that is preserved in the remultiplexing step.

2. The process for transmitting digital television signals according to claim 1, **characterized in that** the value of the PCR field is saved in the OPCR field of the same packet.

3. The process for transmitting digital television signals according to claim 1, **characterized in that**, in order to save the value of the PCR field, the entire packet containing the PCR field is copied to a null packet and a predetermined, arbitrary masking PID, chosen among unreserved values for satellite reception, is assigned to the latter.

4. The process for transmitting digital television signals according to claim 1, **characterized in that**, in order to save the, value of the PCR field, the frequency of emission of the packets having a PCR field is doubled, and the PID of one every two packets is modified by assigning to it a predetermined hiding value.

5. The process for transmitting digital television signals according to claim 1, **characterized in that**, in order to save the value of the PCR field, a null packet between each pair of successive PCR packets is replaced by a PCR packet having a value interpolated between the values of said pair, a predetermined hiding PID value is assigned to the original PCR packets, and the original PID of the PCR packets is assigned to the interpolated packets.

6. The process for transmitting digital television signals according to claim 1, **characterized in that** at reception the tables masked during remultiplexing are restored, all the null packets are removed, the null packets are restored to the terrestrial transport stream and the terrestrial PCR stream is restored.

## Patentansprüche

1. Verfahren zum Übertragen digitaler Fernsehsignale, wobei eine Mehrzahl von elementaren Binärströmen, die in einer zentralen Erzeugungsstation erzeugt werden und entsprechenden Fernsehprogrammen zugeordnet sind, über ein Multiplexing einem einzelnen ersten Transportstrom zugeführt werden, der auch Pakete einschließlich PSI/SI-Tabellen, PCR-Pakete und Nullpakete einschließt, und wobei der erste Transportstrom dann moduliert und an eine Mehrzahl von terrestrischen Stationen übertragen wird, und wobei vor der Modulation der erste Transportstrom den Schritten eines Maskierens der Pakete, die PSI/SI-Tabellen des Typs PAT, SDT, NIT und EIT befördern, durch eine Ersetzung deren PIDs mit vorbestimmten maskierenden PIDs, die aus Werten ausgewählt werden, die nicht für einen Satellitenempfang reserviert sind, und eines erneuten Multiplexens des sich ergebenden Transportstroms unterzogen wird, um einen zweiten Transportstrom für eine Übertragung zu erzeugen, wobei der zweite Transportstrom eine höhere Kapazität als der erste Transportstrom aufweist, **dadurch gekennzeichnet, dass** der Transportstrom vor der Modulation auch den folgenden Arbeitsschritten unterzogen wird:
- Maskieren der Nullpakete in dem Abschnitt des Stroms, der für terrestrische Sender bestimmt ist, durch Ersetzen ihrer PIDs mit einem weiteren, vorbestimmten maskierenden PID-Wert;
- Speichern des Wertes des PCR-Feldes in jedem Datenpaket in einem Bereich des Transportstroms, der bei dem Schritt des erneuten Multiplexens erhalten bleibt.

2. Verfahren zum Übertragen digitaler Fernsehsignale nach Anspruch 1, **dadurch gekennzeichnet, dass** der Wert des PCR-Feldes in dem OPCR-Feld des gleichen Paketes gespeichert wird.

3. Verfahren zum Übertragen digitaler Fernsehsignale nach Anspruch 1, **dadurch gekennzeichnet, dass** zum Speichern des Wertes des PCR-Feldes das gesamte das PCR-Feld enthaltende Paket in ein Nullpaket kopiert wird und ein vorbestimmter, beliebiger maskierender PID, der aus nicht reservierten Werten für den Satellitenempfang ausgewählt ist, dem letzteren zugewiesenen wird.

4. Verfahren zum Übertragen digitaler Fernsehsignale nach Anspruch 1, **dadurch gekennzeichnet, dass** zum Speichern des Wertes des PCR-Feldes die Frequenz der Aussendung der Pakete, die ein PCR-Feld besitzen, verdoppelt und der PID jedes zweiten Paketes **dadurch** modifiziert wird, dass ihm ein vorbestimmter Verdeckungswert zugewiesen wird.

5. Verfahren zum Übertragen digitaler Fernsehsignale nach Anspruch 1, **dadurch gekennzeichnet, dass** zum Speichern des Wertes des PCR-Feldes ein Nullpaket zwischen jedem Paar aufeinanderfolgender PCR-Pakete durch ein PCR-Paket, das einen zwischen den Werten des Paares interpolierten Wert aufweist, ersetzt, ein vorbestimmter Verdeckungs-PID-Wert den ursprünglichen PCR-Paketen zugewiesenen und der ursprüngliche PID der PCR-Pakete den interpolierten Paketen zugewiesenen wird.

6. Verfahren zum Übertragen digitaler Fernsehsignale nach Anspruch 1, **dadurch gekennzeichnet, dass** bei einem Empfang die während des erneuten Multiplexens maskierten Tabellen wiederhergestellt werden, alle Nullpakete entfernt werden, die Nullpakete bezüglich des terrestrischen Transportstroms wiederhergestellt werden und der terrestrische PCR-Strom wiederhergestellt wird.

## Revendications

1. Procédé de transmission de signaux de télévision numériques, dans lequel une pluralité de flux binaires élémentaires, qui sont générés dans une station génératrice centrale et sont associés aux programmes de télévision respectifs, sont multiplexés en un seul premier flux de transport, qui comprend également des paquets contenant des tables PSI/SI, des paquets PCR et des paquets nuls, et le premier flux de transport est alors modulé et transmis à une pluralité de stations terrestres, et dans lequel, avant modulation, le premier flux de transport est soumis aux étapes de masquage des paquets transportant les tables PSI/SI de type PAT, SDT, NIT et EIT, par le remplacement de leur PID par des PID de masquage prédéterminés, choisis parmi des valeurs qui ne sont pas réservées à la réception satellite, et le remultiplexage du flux de transport en résultant afin de générer un second flux de transport pour la transmission, le second flux de transport ayant une capacité plus élevée que le premier flux de transport,
**caractérisé en ce que** le flux de transport, avant modulation, est également soumis aux étapes de fonctionnement suivantes :
- masquage des paquets nuls dans la partie du flux qui est destinée aux émetteurs terrestres, en remplaçant leur PID par une autre valeur PID de masquage prédéterminé ;
- sauvegarde de la valeur du champ PCR dans chaque paquet de données dans une zone du flux de transport qui est préservée dans l'étape de remultiplexage.

2. Procédé de transmission de signaux de télévision numériques selon la revendication 1, **caractérisé en ce que** la valeur du champ PCR est sauvegardée dans le champ OPCR du même paquet.

3. Procédé de transmission de signaux de télévision numériques selon la revendication 1, **caractérisé en ce que**, afin de sauvegarder la valeur du champ PCR, le paquet entier contenant le champ PCR est copié dans un paquet nul et un PID de masquage arbitraire prédéterminé, choisi parmi des valeurs non réservées pour la réception satellite, est attribué à ce dernier.

4. Procédé de transmission de signaux de télévision numériques selon la revendication 1, **caractérisé en ce que**, afin de sauvegarder la valeur du champ PCR, la fréquence d'émission des paquets ayant un champ PCR est doublée, et le PID d'un paquet sur deux est modifié en lui attribuant une valeur de masquage prédéterminée.

5. Procédé de transmission de signaux de télévision numériques selon la revendication 1, **caractérisé en ce que**, afin de sauvegarder la valeur du champ PCR, un paquet nul entre chaque paire de paquets PCR successifs est remplacé par un paquet PCR ayant une valeur interpolée entre les valeurs de ladite paire, une valeur PID de masquage prédéterminée est attribuée aux paquets PCR d'origine, et le PID d'origine des paquets PCR est attribué aux paquets interpolés.

6. Procédé de transmission de signaux de télévision numériques selon la revendication 1, **caractérisé en ce que** à réception les tables masquées pendant le remultiplexage sont restaurées, tous les paquets nuls sont retirés, les paquets nuls sont restaurés vers le flux de transport terrestre et le flux PCR terrestre est restauré.
